# EUROPEAN PATENT SPECIFICATION

(11) **EP 3 528 904 B1**
(45) Date of publication and mention of the grant of the patent: **08.10.2025**
(21) Application number: 17862042.3
(22) Date of filing: 26.09.2017
(51) Int. Cl.: A62C 3/06, F16N 31/00, B08B 17/02, B65D 90/24

(54) **SERVICE LEVEL**
DIENSTEBENE
NIVEAU DE SERVICE

(30) Priority: 18.10.2016 FI 20165791
(43) Date of publication of application: 28.08.2019
(73) Proprietor: Väisänen, Pertti, 78310 Varkaus (FI)
(72) Inventor: Väisänen, Pertti, 78310 Varkaus (FI)
(74) Representative: Kolster Oy Ab
(86) International application number: PCT/FI2017/050677
(87) International publication number: WO 2018/073488

(56) References cited:
- EP-A1- 0 498 057
- EP-A1- 2 287 412
- EP-A1- 2 287 412
- EP-B1- 0 498 057
- DE-A1- 19 712 163
- US-A- 4 099 598
- US-B1- 6 173 856

## Description

The invention relates to a maintenance platform for containment basins of electric devices and/or flammable liquids, which maintenance platform is placed in or on a basin below a container containing flammable liquid. The maintenance platform includes a safety grill installed on a wall of the containment basin, anchor beams, and a fire-resistant cassette, formed of a plate structure, installed between the anchor beams, below the safety grill.

There are drawbacks related to the structures and fire protection of maintenance platforms of high-voltage transformers, reactors and other such electric devices containing oil, as well as containers of other flammable liquids.

In the transfer of electric energy, it is advantageous to use a current as small as possible and a voltage as high as possible, in particular when energy is transferred over long distances. That is why the electric energy produced at energy facilities is converted from a few kilovolts generated by a generator up to as many as several hundreds of kilovolts. Such a high voltage may be transferred over long distances via power lines with minor losses. The power lines of the power distribution network have high-voltage transformer substations in which the high voltage is transformed into a lower mains voltage suitable for household use. In the transformers, the windings coils and iron cores are sunk in a container that is filled with transformer oil. Below the containers of high-voltage transformers there are maintenance platforms used for the maintenance of the transformers. Below the maintenance platform there is a containment basin, container or similar, the purpose of which is to prevent the oil leaking from the container from getting to the environment. Therefore, it must be possible to move on the maintenance platform and it must be such that oil may efficiently flow through it. In addition, the maintenance platform must smother a potential oil fire, if burning oil leaks to the containment basin from the container above.

Currently, a maintenance platform made of perforated sheet metal or of a grill, for example, are used as maintenance platforms. These are associated with many drawbacks and there are several problems in using them.

A perforated sheet metal maintenance platform is made of perforated tin plates. Such a maintenance platform is slippery and the drainage apertures are easily blocked by debris. Its ability for oil penetration is bad, in particular in winter time when the apertures are frozen up. An additional problem is that a fire will directly load the supporting structure. The number of loose parts in the maintenance platform is high. Such a maintenance platform is not suitable for northern conditions. Furthermore, after an oil leak, the surface needs to be washed.

There are maintenance platforms that have a grill and below it a fire-resistant cassette formed of plate structures. However, they are difficult to install and unreliable.

EP 2287412 A1 discloses a device for preventing overflow of flammable leaking chemical products in a tray or a receiving pit placed under a device containing such products. The disclosed solution comprises extinguishing means consisting of a hood covering the tray or the receiving pit and comprising sloped slats between them.

DE 19712163 A1 discloses a porous floor structure designed to drain away water and other fluids. It consists of a number of square gratings set in square frames which may be screwed or bolted together. The edges of the gratings rest on horizontal joggled regions near the top of the sides of the frame. There is a curved pan under each grating to catch the water coming through the grating and channel it to an outlet in one sidewall of the frame. The frames have inward-turned flanges at the bottom which rest on the floor structure.

US 6173856 B1 discloses a liquid containment device for capturing and retaining any liquid falling into the device, such as from a leak, spill or run-off of another liquid container, where the device is designed to fit between the parallel rails of a railroad track with a railroad car positioned above, comprising a generally rectilinear pan or tray and a removable cover which directs rain water into a drain opening which corresponds to an apertured drain column rising from the bottom of the pan, such that with the cover in place rain water is directed into the drain column and passed underneath the pan rather than into the pan itself. Multiple pans may be connected in line through connector fittings in their end walls, or drain conduits may be connected to the fittings for removal of the liquid from the pan. Apertured grating members and absorbent mats may be placed within the pans. The pans may be used in conjunction with lateral pans positioned on the outside of the rails.

It is the purpose of the invention to set forth a maintenance platform by means of which drawbacks related to the current maintenance platforms of containment basins may be removed. In particular, it is the purpose of the invention to set forth a maintenance platform which has a good oil penetration ability as well as strong and light-weight structure, and which may be installed in old and new targets. In addition, an object of the invention is to set forth a maintenance platform which may be installed fast and economically without a crane, and which may also be installed during use.

The object of the invention is achieved with the system which is characterised by what is disclosed in the claims.

The maintenance platform according to the invention characterised in that the fire-resistant cassette is a basin-like structure with a perforated bottom and consisting of four inclined sides. The perforation in the bottom of the fire-resistant cassette allow a flammable liquid, snow, debris etc. to go through and restrict the passing of gasses through them. The operation of the fire-resistant cassette as a fire-smothering structure is based on the restricting of the passing of gasses. The fire-resistant structure establishes, with entirely structural means, disadvantageous conditions for a fire under the fire-resistant structure, from the point of view of the fire continuing. The fire-resistant structure may be installed in new or old structures (on existing ones or on ones purpose-built).

Due to its structure, the fire-resistant structure creates a hydrostatic pressure for the liquid on it. In case of a fire, the fire-resistant structure causes, underneath it, an overpressure compared to the atmospheric pressure / the space over it. The fire-resistant structure smothers the fire due to lack of oxygen / too rich a mixture.

A fire-resistant cassette has a small ability of storing heat energy (it warms up / cools down fast). In a fire, it acts as a cooling factor, and in below zero temperatures when the sun is shining, as a melting factor. The structure is impact-resistant with the grill receiving the impacts.

In a preferred embodiment of the invention, the top part of the fire-resistant cassette has a straight collar. The collar of the fire-resistant cassette acts as a surface supporting the structure, and the fire-resistant cassette is fixed to the grill by it. The fire-resistant structure is installed in the support structure at the collar of the fire-resistant cassette.

In a preferred additional embodiment of the invention, a fire-resistant cassette has one or more basin-like structures consisting of four inclined sides.

In a preferred embodiment of the invention, the maintenance platform includes a plurality of fire-resistant cassettes installed side-by-side. A fire-resistant structure may use 1, 2, 3,... etc, fire-resistant cassettes side-by-side.

The size of the grill is determined on the basis of the number of fire-resistant cassettes used, and also according to how large the desired entities of the fire-resistant cassettes to be handled/installed are. The grill is installed to the fire-resistant cassette so that the steel beams that are the supporting structure are perpendicular to the longitudinal direction of the basin part / perforation of the fire-resistant cassette. This is done for the purpose of fastening and flowing characteristics. This also results in a larger load-bearing surface area between the grill and fire-resistant cassette. The orientation of the grill helps the fastening of the grill to the fire-resistant cassette and more fastening area is achieved by welding and a more flexible choice of the fastening location. The orientation of the grill helps liquid to be spread evenly on the fire-resistant structure of 1 m², at least, and on the other hand prevents it from escaping from upon the fire-resistant structure / acts as a "breakwater" removing kinetic energy from the liquid.

The size of the grill is determined on the basis of the fire-resistant cassette module, and it may be, for example. 0.5 m², 1 m²... etc. The grill and fire-resistant module are always a uniform entity.

The inventive maintenance platform and fire-resistant structure are used to smother liquid fires and also those caused by solid matters. It is used for smothering flammable substances. The applicable substances include flammable liquids, hot sand, and wood dust Uses include containment basins in general, containment basins of high-voltage transformers, containment basins of transformers, transferrable containment basins, transport and storage of flammable liquids/substances.

The maintenance platform according to the invention is built as a planar surface meeting the current standard. It is protected from below by a cassette-typ fire-resistant structure made of steel, which allows water, snow and a possible oil leak through it to the containment basin, but prevents a fire from proceeding from the containment basin over the planar surface and smothers it under it.

The maintenance platform is a strong and light-weight structure, the load-bearing capacity of which may be built to meet the standard and customer wishes. It is easy to install to new and old targets. The modular structure is fast to install, it is self-cleaning. It has a long service life. In old targets, the capacity of the containment basin increases and in new targets it lowers the construction costs of the basin. It has a planar surface provided with an anti-slip feature and a good oil penetration ability. In addition, it may be installed during use and it may be installed without a crane.

In the following, the invention will be described in greater detail with reference to the attached drawings, in which
Figure 1 is a top view of an inventive fire-resistant cassette of a maintenance platform,
Figure 2 is a side view of the fire-resistant cassette of Figure 1,
Figure 3 is a top view of the inventive fire-resistant cassette of a maintenance platform according to Figure 1, with a grill installed on it,
Figure 4 shows the fire-resistant cassette of Figure 3 as seen from a long side, and
Figure 5 shows the structure of Figure 3 obliquely from the front.

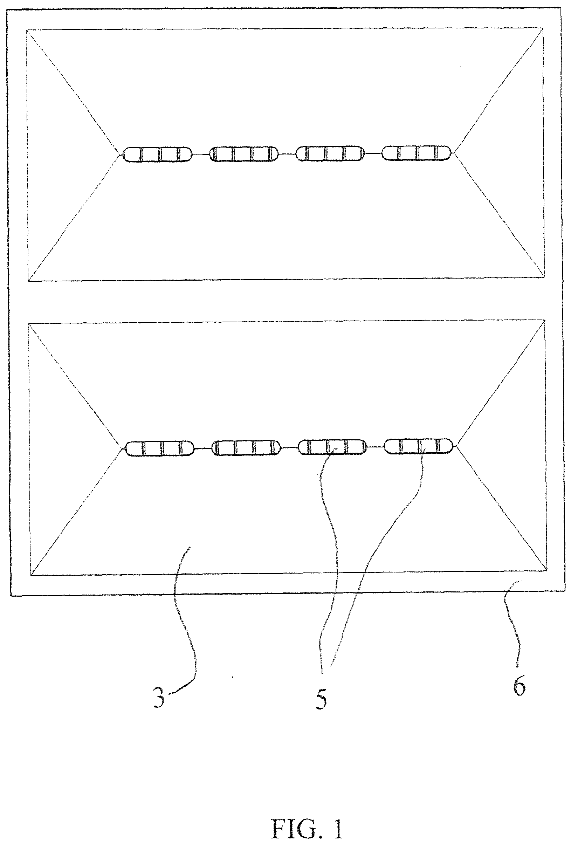

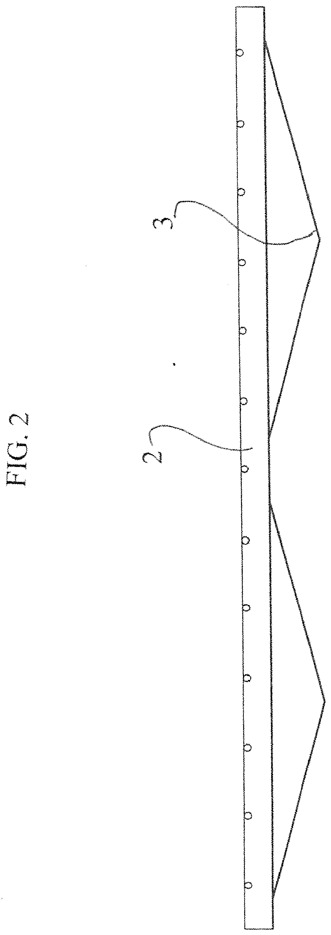

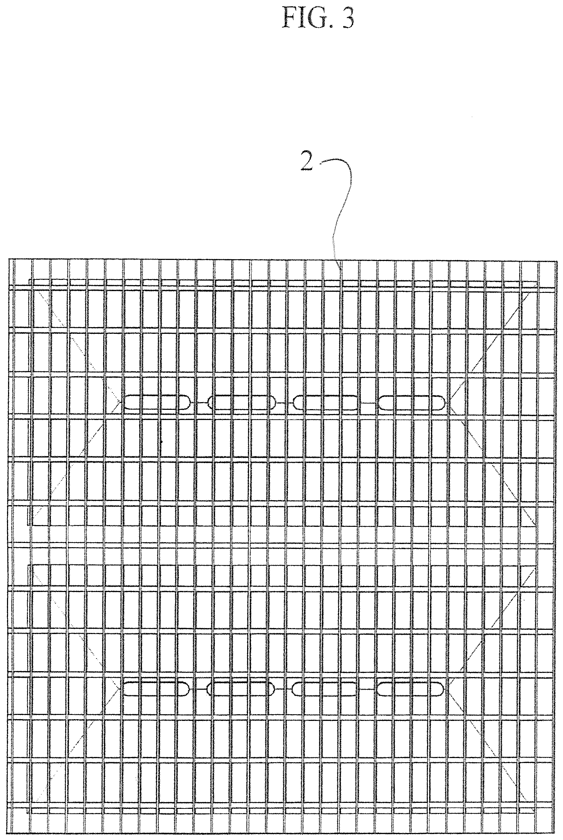

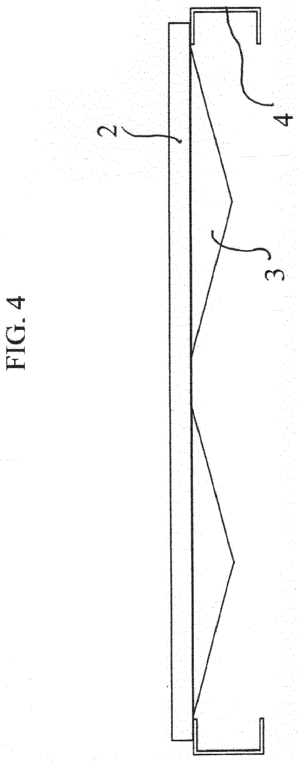

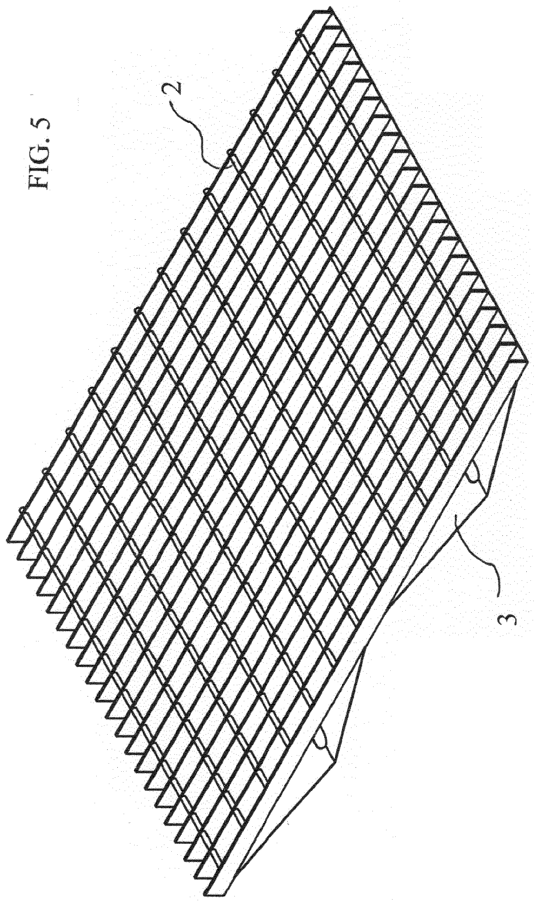

The maintenance platform according to Figure 1 to 5 include load-bearing beams, safety grill 2, fire-resistant cassettes 3, and anchor beams 4. The fire-resistant cassette 3 is a basin-like structure with a perforated 5 bottom and consisting of four inclined sides, and has at its top part a straight collar 6 that surrounds the entire top part of the structure. In the embodiment according to the figures, a fire-resistant cassette 3 has two basin-like structures consisting of four inclined sides. In other embodiments, a fire-resistant cassette may have one or more basin-like structures consisting of four inclined sides. A maintenance platform includes a plurality of fire-resistant cassettes installed side-by-side.

The load-bearing beams are fixed to the wall of the containment basin, or on wider surfaces the backs of the beams against each other so that a wide, planar surface is created, which is supported to the bottom or wall of the containment basin. The safety grill 2 is fixed to the top surface of the load-bearing beam to act as a maintenance and walking surface. The safety grill is a grill structure made of metal, having such openings that it penetrates water, snow and possible oil. The anchor beams 4 are places inside the load-bearing beams. The fire-resistant cassettes 3 are installed to rest on the anchor beams, supported by their collar 6. The fire-resistant cassette is perpendicular in relation to the load-bearing steel, creating a stiffer structure than previously. The structures together form a load-bearing structure which is protected against a fire from below.

As materials of the structure, galvanized iron, stainless steel, aluminium, or a fireproof composite structure may be used. The structure is out together by welding or by bolted joints, and the entire structure is electrically conductive and easy to ground.

The structure is zinc-coated. The entire fire-resistant structure is electrically conductive, so it is not necessary to ground each element separately, but two points/area are enough for grounding.

The structure of the fire-resistant cassette is ice-proof. The inclined surfaces of the basin-like structure are slippery and prevent the forming of ice, and direct the forces that result from the forming of ice upward without breaking the fire-resistant structure.

The invention is not restricted to the preferred embodiments disclosed in the above, but it may vary within the scope of the inventive idea defined in the claims.

## Claims

1. A system comprising :
a containment basin for electric devices and flammable liquids, a maintenance platform for said containment basin,
a container configured to contain the flammable liquids and the electric devices, which maintenance platform is placed in or on the basin below the container, wherein the maintenance platform includes a safety grill (2) installed on a wall of the containment basin, anchor beams (4), and a fire-resistant cassette (3), formed of a plate structure, installed between the anchor beams and below the safety grill (2), and wherein the fire-resistant cassette (3) has one or more basin-like structures with a perforated (5) bottom and comprising four inclined sides.

2. A system as claimed in claim 1, ***characterised* in that** there is a straight collar (6) at the top part of the fire-resistant cassette.

3. A system as claimed in any one of claims 1 to 2, ***characterised* in that** the maintenance platform includes a plurality of fire-resistant cassettes installed side-by-side.

## Patentansprüche

1. System, umfassend:
eine Auffangwanne für elektrische Vorrichtungen und brennbare Flüssigkeiten,
eine Wartungsplattform für die Auffangwanne,
einen Behälter, der dazu ausgestaltet ist, die brennbaren Flüssigkeiten und die elektrischen Vorrichtungen aufzunehmen,
wobei die Wartungsplattform in oder auf der Wanne unter dem Behälter platziert ist, wobei die Wartungsplattform ein Sicherheitsgitter (2), das an einer Wand der Auffangwanne eingerichtet ist, Ankerbalken (4) und eine feuerfeste Kassette (3) umfasst, die aus einer Plattenstruktur gebildet ist und zwischen den Ankerbalken und unter dem Sicherheitsgitter (2) eingerichtet ist, und wobei die feuerfeste Kassette (3) eine oder mehrere wannenartige Strukturen mit einem perforierten Boden (5) aufweist und vier geneigte Seiten aufweist.

2. System nach Anspruch 1, **dadurch gekennzeichnet, dass** sich am oberen Teil der feuerfesten Kassette ein gerader Kragen (6) befindet.

3. System nach einem der Ansprüche 1 bis 2, **dadurch gekennzeichnet, dass** die Wartungsplattform eine Vielzahl von feuerfesten Kassetten umfasst, die nebeneinander eingerichtet sind.

## Revendications

1. Système comprenant :
un bassin de confinement pour des dispositifs électriques et des liquides inflammables,
une plateforme de maintenance pour ledit bassin de confinement,
un contenant configuré pour contenir les liquides inflammables et les dispositifs électriques, laquelle plateforme de maintenance est placée dans ou sur le bassin au-dessous du contenant, dans lequel la plateforme de maintenance comprend une grille de sécurité (2) installée sur une paroi du bassin de confinement, des poutres d'ancrage (4), et une cassette résistante au feu (3) formée avec une structure de plaque, installée entre les poutres d'ancrage et au-dessous de la grille de sécurité (2), et dans lequel la cassette résistante au feu (3) a une ou plusieurs structures en forme de bassin avec un fond perforé (5) et comprenant quatre côtés inclinés.

2. Système selon la revendication **1, caractérisé en ce qu'**il y a un collier droit (6) au niveau de la partie supérieure de la cassette résistante au feu.

3. Système selon l'une quelconque des revendications 1 à **2, caractérisé en ce que** la plateforme de maintenance comprend une pluralité de cassettes résistantes au feu installées côte à côte.
